## Europäisches Patentamt
## European Patent Office
## Office européen des brevets

(11) Numéro de publication: **0 205 389**
**B1**

(12) **FASCICULE DE BREVET EUROPÉEN**

(45) Date de publication du fascicule du brevet:
23.11.88

(51) Int. Cl.⁴: **F 16 F 9/50**

(21) Numéro de dépôt: **86401256.2**

(22) Date de dépôt: **10.06.86**

(54) Amortisseur pour élément de suspension de véhicule lourd.

(30) Priorité: **10.06.85 FR 8508756**

(43) Date de publication de la demande:
**17.12.86 Bulletin 86/51**

(45) Mention de la délivrance du brevet:
**23.11.88 Bulletin 88/47**

(84) Etats contractants désignés:
**DE GB IT**

(56) Documents cité:
**DE-A-2 139 942
DE-A-2 230 975
DE-U-1 985 453
FR-A-2 404 772
GB-A-1 250 216
GB-A-2 011 021
GB-A-2 093 155
US-A-3 459 439
US-A-3 614 125
US-A-4 156 536**

(73) Titulaire: **S.A.M.M.- Société d'Applications des Machines Motrices, Chemin de la Malmaison, F-91570 Bièvres (FR)**

(72) Inventeur: **Joseph, Philippe, Quartier Le Degay Loriol du Comtat, F-84200 Carpentras (FR)**
Inventeur: **Perrochat, Jean Michel, 103, avenue Verdier, F-92120 Montrouge (FR)**

(74) Mandataire: **Moncheny, Michel, c/o Cabinet Lavoix 2 Place d'Estienne d'Orves, F-75441 Paris Cedex 09 (FR)**

## Description

La présente invention à pour objet un amortisseur pour élément de suspension de véhicule lourd.

Cet élément de suspension est du type de ceux décrits dans les demandes de brevet français n° 8 505 064 et n° 8 505 067 déposées le 3 Avril 1985 par la Demanderesse (= EP-A-197 858 et 197 859 publiés 15.10. 1986).

Ces demandes de brevets décrivent un élément de suspension comportant un bras traversé par une fusée de roue du véhicule, articulé rotativement sur une partie fixe solidaire du châssis du véhicule, avec interposition de moyens de roulement entre cette partie fixe et le bras rotatif. Une chambre hydraulique est ménagée dans le bras et contient un piston coulissant sur lequel est articulée une bielle dont l'extrémité opposée au piston est de son côté articulée sur la partie fixe, cette dernière présentant un volume intérieur concentrique à l'axe de la partie fixe solidaire du châssis du véhicule. Plus particulièrement, la demande de brevet 8 505 064 décrit un correcteur de garde au sol destiné à être placé dans le volume intérieur précité, afin d'asservir constamment la garde au sol du châssis du véhicule à une valeur préréglée, et ce quel que soit le profil du terrain sur lequel évolue le véhicule.

Cet élément de suspension comporte un amortisseur communiquant d'une part avec la chambre hydraulique du piston, et d'autre part, avec des chambres hydrauliques séparées de chambres de gaz par deux pistons librement coulissants.

C'est donc c'est amortisseur qui fait l'objet de la présente invention.

Le document DE-A-2 139 942 révèle un amortisseur pour élément de suspension de véhicule dont le facteur d'amortissement est élevé pour des fréquences d'excitation faibles et faible pour des fréquences d'excitation supérieures.

Suivant l'invention, l'amortisseur comprend un tiroir creux monté coulissant dans une pièce fixe logée dans une fourrure intérieure au corps, séparée de ce dernier par un intervalle annulaire et présentant une ouverture qui communique avec un conduit débouchant dans la chambre hydraulique, la pièce fixe est montée avec jeu dans la fourrure et percée de lumières radiales communiquant avec l'intérieur du tiroir, lequel est sollicité contre ladite caisse fixe par un organe élastique de rappel prenant appui sur le corps, le tiroir étant agencé de façon à pouvoir occuper alternativement une première position dans laquelle il obture toute communication entre ledit intervalle annulaire et l'intérieur du tiroir lorsque l'élément de suspension est soumis à une fréquence d'oscillation faible, inférieure à $\sqrt{2}$ fois sa fréquence propre de résonance, et une seconde position dans laquelle il établit une communication entre son volume intérieur et l'intervalle annulaire entre la fourrure et le corps lorsque l'élément de suspension est soumis à une fréquence d'oscillation supérieure à sa fréquence de résonance.

Dans ces conditions, lorsque la fréquence d'oscillation ou d'excitation de la roue associée à cet élément de suspension est faible, le tiroir reste fermé, la force et le déplacement transmis à l'élément de suspension sont importants, et l'amortissement est élevé.

En revanche, lorsque la fréquence d'oscillation de la roue est suffisamment élevée et que les sollicitations transmises à la suspension sont suffisamment fortes, le tiroir s'ouvre et reste ouvert, de sorte que l'amortissement obtenu est faible. En d'autres termes, le véhicule ne subit pas alors de déplacements verticaux importants.

D'autres particularités et avantages de l'invention apparaîtront au cours de la description qui va suivre, faite en référence aux dessins annexés qui en illustrent un mode de réalisation à titre d'exemple non limitatif:

- la Figure 1 est une vue en coupe longitudinale avec élévation partielle d'un mode de réalisation de l'élément de suspension dans lequel peut être monté l'amortisseur visé par l'invention;
- la Figure 2 est une vue en coupe axiale d'une forme de réalisation de l'amortisseur selon l'invention, le tiroir étant ferme;
- la Figure 3 est une vue analogue à la Figure 2 montrant l'amortisseur avec son tiroir ouvert;
- la Figure 4 est un diagramme illustrant la variation de l'amortissement en fonction de la fréquence d'oscillation transmise à l'élément de suspension et à son amortisseur.

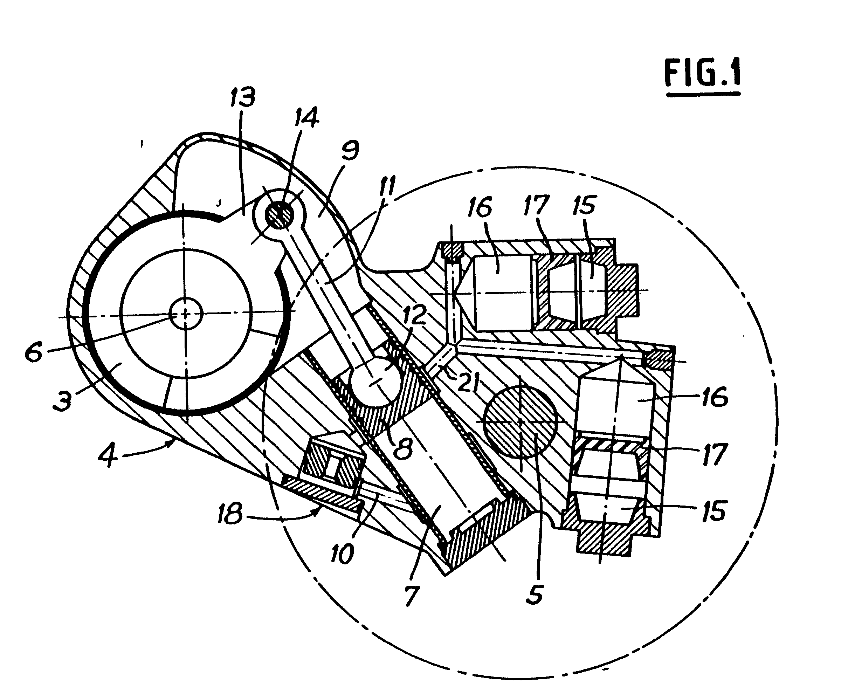

La Figure 1 représente un élément de suspension pour véhicules lourds similaire à celui décrit dans la demande de brevet français précité n° 8 505 067.

Cet élément de suspensiion comporte un bras 4 traversé par une fusée de roue 5 (la roue n'étant pas représentée) et articulé rotativement sur une partie fixe 3, laquelle est coaxiale à un axe 6 relié au châssis (non représenté). Une chambre hydraulique 7 est ménagée dans le bras 4 et contient un piston coulissant 8 qui sépare la chambre 7 d'un logement 9. Une bielle 11 est articulée d'une part dans le piston 8 par une rotule 12, et d'autre part par un axe 14 sur une patte 13 solidaire de la partie fixe 3. Le bras 4 est également muni de deux chambres de gaz 15 séparées chacune d'une chambre hydraulique 16 par deux pistons 17 librement coulissants, et est équipé d'un amortisseur 18 relié d'une part à la chambre hydraulique 7 par une canalisation 10, et d'autre part aux deux chambres hydrauliques 16 par une canalisation 21.

Ces divers organes, à l'exception de l'amortisseur 18, ainsi que leur circuit hydraulique d'alimentation sont décrits en détail dans la demande de brevet ci-dessus, de sorte que leur description et leur fonctionnement ne seront pas repris ici.

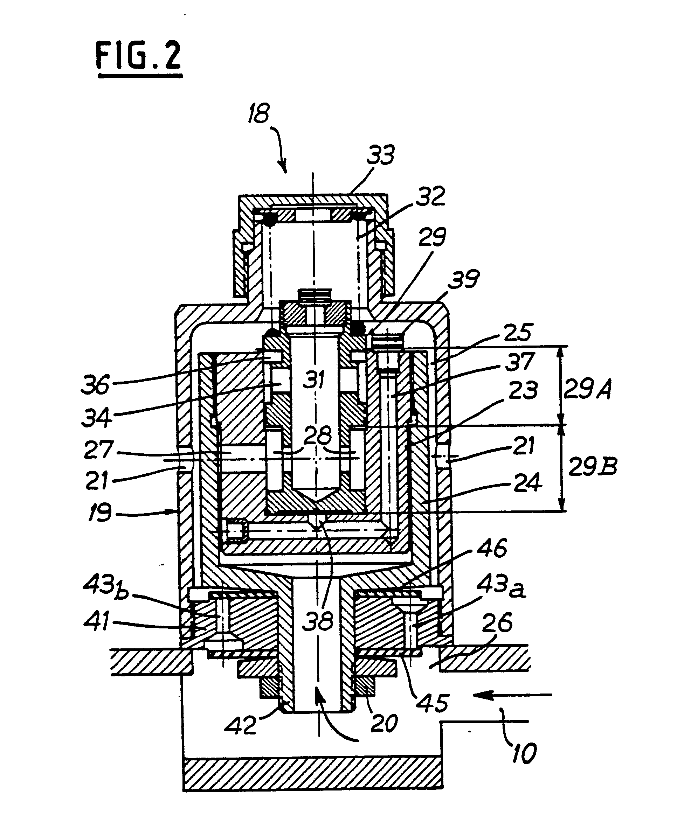

On décrira maintenant en se référant plus particulièrement aux Figures 2 à 4 une forme de réalisation de l'amortisseur 18 visé par l'invention.

L'amortisseur 18 comprend un corps creux 19, présentant une partie cylindrique percée d'une série de lumières 21, qui contient une pièce fixe 23 logée dans une fourrure 24 intérieure au corps 19 et séparée de ce dernier par un intervalle annulaire 25.

Le corps 19 présente une ouverture 26 qui communique avec le conduit 10 débouchant dans la chambre hydraulique 7, et la pièce fixe 23 est montée avec jeu dans la fourrure 24. Des lumières radiales 27 sont percées dans la pièce fixe 23 et sont prolongées par des ouvertures 28 percées dans un tiroir creux 29 monté coulissant axialement dans la pièce fixe 23. Les ouvertures 28 débouchent dans le volume intérieur 31 du tiroir 29, qui est sollicité en appui contre le fond de la pièce fixe 23 par un ressort de rappel 32 dont une extrémité prend elle-même appui sur la partie terminale 33 du corps 19.

La paroi du tiroir 29 est percée d'autres lumières 34 qui permettent au liquide hydraulique de passer du volume intérieur 31, dans une gorge annulaire 36 formée dans l'extrémité du tiroir 29, du côté de son ressort de rappel 32.

Dans la pièce fixe 23 est ménagée une canalisation 37 débouchant à une extrémité dans un perçage 38 de la pièce 23, agencée en regard de l'extrémité du tiroir 29 opposée au ressort 32, tandis que l'autre l'extrémité de la canalisation 37 est pourvue d'un gicleur 39 avec éventuellement un "by-pass" de réalimentation.

La section de la partie 29A du tiroir 29 la plus proche du ressort de rappel 32, et sur laquelle agit la pression d'excitation $P_1$ provenant de la chambre hydraulique 7 comme on l'expliquera plus en détail ci-après, est légèrement supérieure à la section de la partie 29B du tiroir 29 sur laquelle s'exerce la pression hydraulique $P_0$ transmise par le gicleur 39, la canalisation 37 et le perçage 38.

Le corps 19 est fermé par une plaque 41 traversée centralement par un prolongement tubulaire axial 42 de la fourrure 24, qui débouche dans la canalisation 10. La plaque 41 est également percée d'orifices 43a, 43b associés à deux empilages de rondelles élastiques 45 et 46, maintenues par un écrou 20. De façon connue en soi, l'orifice 43b est agencé de manière à laisser pénétrer dans l'orifice 43b le fluide hydraulique à l'enfoncement du piston 8 dans la chambre 7, qui soulève la seconde rondelle 46 montée à l'extrémité opposée de l'orifice 43b, de sorte que le fluide hydraulique pénètre dans l'intervalle annulaire 25.

Inversement, la rondelle 46 associée à l'orifice 43a est disposée entre la plaque 41 et la fourrure 24, et agencée similairement à la rondelle 45 pour laisser passer, à la détente, le fluide hydraulique de l'intervalle annulaire 25 dans l'orifice 43a, ce fluide hydraulique s'écoulant ensuite entre l'extrémité de l'orifice 43a et la rondelle déformable 45, vers la canalisation 10.

Le fonctionnement de l'amortisseur 18 qui vient d'être décrit est le suivant.

Lorsque l'élément de suspension est soumis à une fréquence d'oscillation faible, inférieure à sa fréquence de résonance, l'augmentation de la pression hydraulique d'excitation $P_1$ régnant dans l'intérieur 31 du tiroir 29 (le fluide hydraulique pouvant pénétrer dans le tiroir 29 grâce au jeu réservé entre la pièce fixe 23 et la fourrure 241, est insuffisante pour décoller le tiroir 29 du fond de la pièce 23, contre la force antagoniste de rappel du ressort 32. Le tiroir 29 reste donc dans sa position illustrée à la Figure 2, où il obture toute communication entre l'intervalle annulaire 25 d'une part, et la gorge 36, les ouvertures 34 et le volume intérieur 31 d'autre part. Le liquide hydraulique s'écoule alors par les orifices 43b, décolle la rondelle 46 et pénètre dans l'intervalle annulaire 25, puis sort du corps 19 par les lumières 21. L'amortissement est donc important, de même que le déplacement vertical de l'élément de suspension et par conséquent du véhicule.

Par contre, lorsque la fréquence d'excitation ou d'oscillation est supérieure à la fréquence de résonance de l'élément, c'est-à-dire lorsque l'élément de suspension subit des fluctuations rapides quand le véhicule roule sur une succession rapprochée de bosses et de creux en terrain accidenté, et qu'il s'ensuit une première sollicitation suffisamment violente, celle-ci provoque une augmentation de la pression différentielle régnant dans le volume intérieur 31, qui provoque le décollement du tiroir 29 du fond de la pièce fixe 23 à l'encontre de la force du ressort de rappel 32. En effet, la majeure partie du liquide hydraulique n'a pas le temps de s'écouler par les orifices 43a en raison de la fréquence élevée d'oscillation et pénètre donc dans le tiroir 31 par l'extrémité tubulaire 42, et le jeu entre la pièce fixe 23 et la fourrure 24. D'autre part, le matelas de liquide hydraulique fourni par le gicleur 39 entre le fond de la pièce 23 et l'extrémité de la partie 29B du tiroir 29, freine les déplacements de ce dernier, qui de ce fait reste ouvert si les variations de pression sont suffisamment brèves (fréquence d'oscillation élevée).

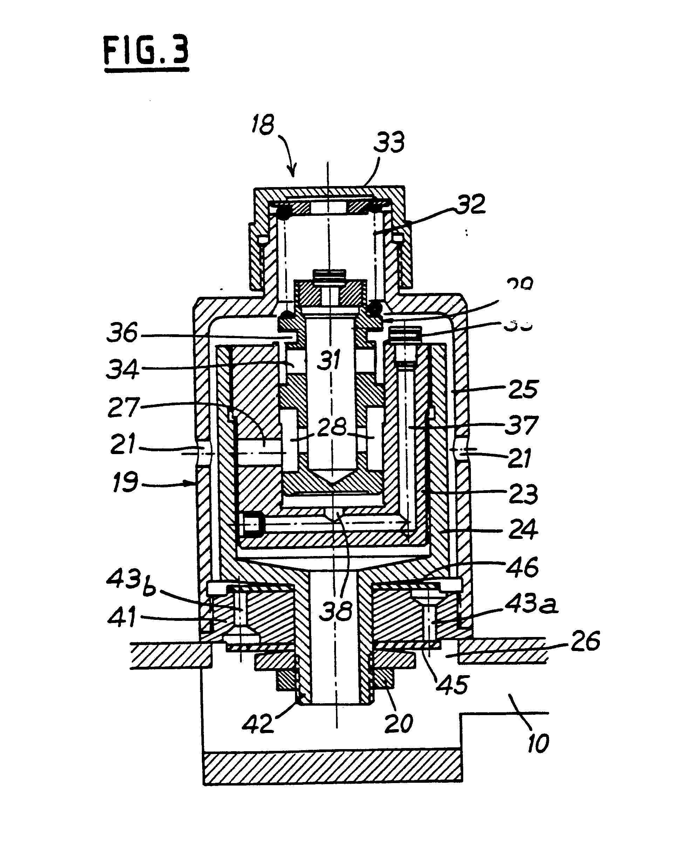

La plus grande partie du liquide hydraulique est alors by-passée par l'intérieur du tiroir 29 qui vient prendre sa position de la Figure 3 et qui communique avec l'intervalle annulaire 25. Le liqude hydraulique s'écoule donc pour l'essentiel par l'intérieur du tiroir 29, l'intervalle annulaire 25 et les lumières latérales 21 et l'amortissement équivalent est faible.

Le fonctionnement de l'amortisseur peut être optimisé par des réglages appropriés du gicleur 39 et du ressort 32.

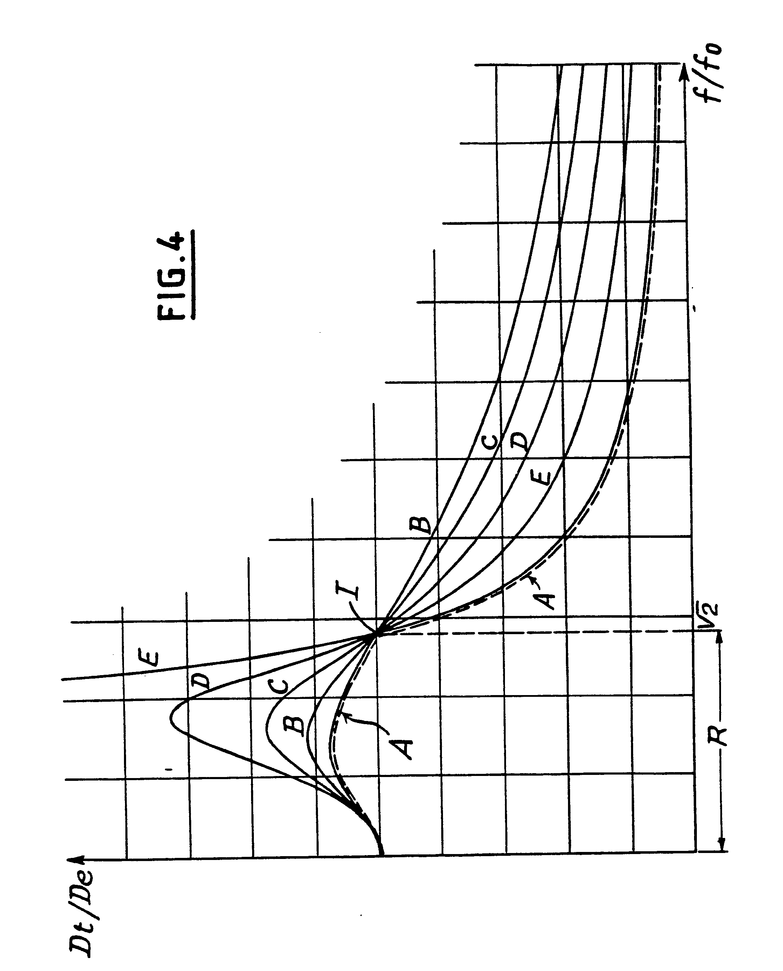

Le diagramme de la Figure 4 illustre ce fonctionnement:

On a porté en abscisses le rapport de la fréquence d'excitation f à la fréquence propre fo de l'élément de suspension, et en ordonnées le rapport $D_t/D_e$ du déplacement transmis $D_t$ à

l'élément de suspension, au déplacement $D_e$ d'excitation (déplacement de la roue associée à l'élément de suspension).

Chacune des courbes A, B, C, D, E passe par un point I d'abscisses $f/f_0 = \sqrt{2}$ et d'ordonnées $D_d/D_e = 1$, la courbe recherche étant A. En effet, on voit que la partie de la courbe A située entre les abscisses 0 et $\sqrt{2}$, dans laquelle le tiroir 29 est fermé, correspond à des déplacements d'amplitude minimum de la masse suspendue, pour des sollicitations lentes, et un amortissement important.

Par contre, la partie de la courbe A située au-delà du point I d'abscisses $\sqrt{2}$, dans laquelle le tiroir 29 est ouvert et l'amortissement faible par écoulement du fluide hydraulique principalement par l'intérieur du tiroir 29, correspond à des déplacements faibles de l'élément de suspension et du châssis du véhicule pour des fluctuations d'excitation rapides.

Le facteur d'amortissement est donc élevé pour des fréquences d'excitation faibles, et faible pour des fréquences d'excitation supérieures à $\sqrt{2}$ fois la fréquence propre de l'élément de suspension. En d'autres termes, le déplacement de la masse suspendue est minimisée par l'amortisseur selon l'invention, pour toute fréquence excitatrice. L'invention n'est pas limitée au mode de réalisation décrit et peut comporter des variantes d'exécution, dans le cadre des revendications ci-après.

## Revendications

1. Amortisseur (18) pour élément de suspension de véhicule lourd, comportant un corps creux (19) adapté pour communiquer d'une part avec une source de fluide hydraulique et d'autre part avec une chambre hydraulique (7) de l'élément, ce corps étant muni de rondelles élastiques amortisseurs (45 - 46), <u>caractérisé</u> en ce qu'il comprend un tiroir creux (29) monté coulissant dans une pièce fixe (23) logée dans une fourrure (24) intérieure au corps (19), séparée de ce dernier par un intervalle annulaire (25) et présentant une ouverture qui communique avec un conduit (10) débouchant dans la chambre hydraulique (7), en ce que la pièce fixe (23) est montée avec jeu dans la fourrure (24) et percée de lumières radiales (27) communiquant avec l'intérieur (31) du tiroir (29), lequel est sollicité contre ladite pièce (23) par un organe élastique de rappel (32) prenant appui sur le corps, le tiroir (29) étant agence de façon à pouvoir occuper alternativement une première position dans laquelle il obture toute communication entre ledit intervalle annulaire (25) et l'intérieur du tiroir (29) lorsque l'élément de suspension est soumis à une fréquence d'oscillation faible, inférieure à $\sqrt{2}$ fois sa fréquence de résonance, et une seconde position dans laquelle il établit une communication entre son volume intérieur (31) et l'intervalle annulaire (25) entre la fourrure (24) et le corps (19) lorsque l'élément de suspension est soumis à une fréquence d'oscillation supérieure à $\sqrt{2}$ fois sa fréquence de résonance.

2. Amortisseur selon la revendication 1, caractérisé en ce qu'une canalisation (37) débouchant à une extrémité sur une face terminale du tiroir (29) opposée à son organe de rappel (32) et pourvue d'un gicleur (39), avec un clapet de réalimentation éventuellement, à son autre extrémité, est ménagée dans la pièce fixe (23), de manière à maintenir sous le tiroir un matelas de fluide hydraulique susceptible de freiner les déplacements de celui-ci.

3. Amortisseur selon la revendication 2, caractérisé en ce que la section de la partie (29B) du tiroir 29 sur laquelle s'exerce la pression hydraulique transmise par le gicleur (39) est légèrement inférieure à la section de la partie (29A), du tiroir sur laquelle agit la pression d'excitation provenant de la chambre hydraulique (7) et qui est celle du fluide hydraulique à l'intérieur (31) du tiroir.

## Claims

1. Shock absorber (18) for a suspension element of a heavy vehicle, comprising a hollow body (19) adapted to communicate, on the one hand, with a hydraulic fluid source, and on the other hand, with a hydraulic chamber (7) of the element, this body being provided with elastic damping washers, (45 - 46), characterised in that it comprises a hollow slide (29) slidably mounted in a fixed member (23) accommodated in a sleeve (24) inside the body (19), separated from this latter by an annular gap (25) end having an opening which communicates with a conduit (10) issuing into the hydraulic chamber (7), (and) in that the fixed member (23) is mounted with clearance in the sleeve (24) and pierced by radial ports (27) communicating with the interior (31) of the slide (29) which is blased against the said member (23) by an elastic restoring member (32) bearing on the body, the slide (29) being arranged so as to be capable of occupying alternately a first position wherein it obturates any communication between the said annular gap (25) and the interior of the slide (29) when the suspension element is subjected to a low frequency oscillation less then $\sqrt{2}$ times its frequency of resonance and a second position wherein it establishes a communication between its internal volume (31) and the annular gap (25) between the sleeve (24) and the body (19) when the suspension element is subjected to an oscillation frequency greater than $\sqrt{2}$ times its frequency of resonance.

2. Shock absorber according to claim 1, characterised in that a duct (37) is arranged in the fixed member (23) issuing at one end on an and surface of the slide (29) on the opposite side to its restoring member (32) and provided with a nozzle (39), with a resupply valve at its other end if required, so as to maintain a hydraulic fluid cushion under the slide, capable of restraining the displacements of the latter.

3. Shock absorber according to claim 2, characterised in that the cross-section of the part (29B) of the slide (29) whereon the hydraulic pressure transmitted by the nozzle (39) is exerted, is slightly smaller than the cross section of the part (29A) of the slide whereon there acts the excitation pressure coming from the hydraulic chamber (7) and which is that of the hydraulic fluid in the interior (31) of the slide.

**Patentansprüche**

1. Stoßdämpfer (18) für ein Aufhängungsteil von Schwerfahrzeugen, mit einem Hohlkörper (19), der dafür ausgebildet ist, einerseits mit einer Quelle für Hydraulikflüssigkeit und andererseits mit einer Hydraulikkammer (7) des Teils in Verbindung zu Stehen, und mit dämpfenden Federscheiben (45 - 46) versehen ist, dadurch gekennzeichnet, daß er aus einem Hohlschieber (29) besteht, der in einem festen Teil (23) gleitend eingebaut ist, das in einem Futter (24) innerhalb des Körpers (19) angeordnet ist, von dem es durch einen ringförmigen Zwischenraum (25) getrennt ist und eine Öffnung aufweist, die mit einer in die Hydraulikkammer (7) führenden Leitung (10) verbunden ist, und dadurch, daß der feste Teil (23) mit Spiel in das Futter (24) eingebaut und mit radialen Öffnungen (27) durchbrochen ist, die mit dem Inneren (31) des Schiebers (29) in Verbindung stehen, welcher durch ein elastisches Rückstellorgan (32) unter Abstützung am Körper gegen das genannte Teil (23) gedrückt wird, wobei der Schieber (29) so ausgebildet ist, daß er abwechselnd eine erste Stellung einnehmen kann, in der er jede Verbindung zwischen dem genannten ringförmigen Zwischenraum (25) und dem Inneren des Schiebers (29) verschließt, wenn das Aufhängungsteil einer Schwingung mit geringer Frequenz, und zwar geringer als das $\sqrt{2}$-fache seiner Resonanzfrequenz, unterworfen wird und eine zweite Stellung einnehmen kann, in der er eine Verbindung zwischen seinem Innenraum (31) und dem ringförmigen Zwischenraum (25) zwischen dem Futter (24) und dem Körper (19) herstellt, wenn das Aufhängungsteil einer Schwingungsfrequenz größer als das $\sqrt{2}$-fache seiner Resonanzfrequenz unterworfen wird.

2. Stoßdämpfer nach Anspruch 1, dadurch gekennzeichnet, daß eine an einem Ende an einer dem Rückstellorgan (32) gegenüberliegenden Endfläche des Schiebers (29) endende und mit einer Düse (39) und am anderen Ende gegebenen falls mit einer Klappe zur Nachspeisung versehene Leitung (37) im festen Teil (23) so ausgespart ist, daß unter dem Schieber ein zum Bremsen seiner Bewegungen geeignetes Polster von Hydraulikflüssigkeit aufrechterhalten wird.

3. Stoßdämpfer nach Anspruch 2, dadurch gekennzeichnet, daß der Querschnitt des Teils (29B) des Schiebers (29), auf den der durch die Düse (39) übermittelte hydraulische Druck einwirkt, geringfügig kleiner als der Querschnitt des Teils (29A) des Schiebers ist, auf den der von der Hydraulikkammer (7) herrührende Steuerdruck ein wirkt, der dem der Hydraulikflüssigkeit im Inneren (31) des Schiebers entspricht.

FIG.1

# FIG.2

# FIG.3

FIG.4

0 205 389